(19) Europäisches Patentamt
European Patent Office
Office européen des brevets

(11) **EP 4 038 328 B1**

(12) **EUROPEAN PATENT SPECIFICATION**

(45) Date of publication and mention
of the grant of the patent:
**04.09.2024 Bulletin 2024/36**

(21) Application number: **19783253.8**

(22) Date of filing: **01.10.2019**

(51) International Patent Classification (IPC):
***F25B 49/02*** *(2006.01)*

(52) Cooperative Patent Classification (CPC):
**F25B 49/022;** F25B 2600/0253; F25B 2600/112

(86) International application number:
**PCT/EP2019/076527**

(87) International publication number:
**WO 2021/063485 (08.04.2021 Gazette 2021/14)**

(54) **A REFRIGERATOR APPLIANCE WITH HIGH FREEZER CAPACITY**

KÜHLSCHRANK MIT HOHER GEFRIERKAPAZITÄT

APPAREIL DE RÉFRIGÉRATION À HAUTE CAPACITÉ DE CONGÉLATION

(84) Designated Contracting States:
**AL AT BE BG CH CY CZ DE DK EE ES FI FR GB
GR HR HU IE IS IT LI LT LU LV MC MK MT NL NO
PL PT RO RS SE SI SK SM TR**

(43) Date of publication of application:
**10.08.2022 Bulletin 2022/32**

(73) Proprietor: **ELECTROLUX APPLIANCES
AKTIEBOLAG
105 45 Stockholm (SE)**

(72) Inventor: **VARGAS, Mario
10545 Stockholm (SE)**

(74) Representative: **Electrolux Group Patents
AB Electrolux
Group Patents
S:t Göransgatan 143
105 45 Stockholm (SE)**

(56) References cited:
**CN-A- 106 123 441    US-A1- 2007 012 055
US-A1- 2011 302 939**

**Description**

**TECHNICAL FIELD**

The invention relates to a refrigeration appliance. In particular, the present invention relates to a refrigeration appliance having a fresh-food compartment configured for storing food items at a first target temperature above zero degrees Celsius; and a freezer compartment configured for storing food items at a second target temperature below zero degrees Celsius.

**BACKGROUND**

Conventional refrigeration appliances, such as domestic refrigerators, typically have both a fresh-food compartment and a freezer compartment or section. The fresh-food compartment is where food items such as fruits, vegetables, and beverages are stored and the freezer compartment is where food items that are to be kept in a frozen condition are stored. A typical refrigerator includes a freezer compartment that operates at a temperature below freezing and a fresh-food compartment that operates at a temperature between the ambient temperature (that is, the temperature in the space outside the refrigerator cabinet) and freezing. The refrigerators are provided with a cooling/refrigeration system for the purpose of generating and dispersing cold air into the refrigeration cavities. The refrigeration system typically maintains the fresh-food compartment at temperatures around and above 0 °C, such as between 2 °C and 10 °C and the freezer compartments at a lower temperature such typically temperatures below 0 °C, such as between 0 °C and -20 °C. The refrigeration system can include a standard compressor or a variable speed compressor (VSC), a condenser, a condenser fan, an evaporator connected in series and charged with a refrigerant, and an evaporator fan. The evaporator fan circulates cooling air through the refrigerator compartments and improves heat transfer efficiency.

Cooling air can be split, channeled, ducted, and then delivered into the freezer compartment to establish a freezer compartment temperature with a portion of the cooling air further directed to the fresh-food compartment to maintain a desired fresh-food compartment temperature. Cooling air is guided through a passageway (e.g., a cooling air channel or air duct) that is in fluid communication with the cooling system and both the freezer and the fresh-food compartments. A damper or baffle can be arranged within the passageway to selectively allow cooling air to pass into one, the other, or both of the freezer and the fresh-food compartments.

The refrigerators can include an electronic control system to control the refrigeration components, such as the compressor, condenser, evaporator, etc. The control system can use several factors, such as temperature of the freezer and fresh-food compartments, the ambient temperature, upper and lower temperature limits, etc., to vary parameters of the refrigeration components, such as turning on and off the compressor, or the speeds of the compressor, the condenser fan, and the evaporator fan, for example. Temperature sensors can be provided inside and outside the refrigerator to measure the temperature inside the freezer and fresh-food compartments, as well as the ambient temperature.

Some multi-compartment refrigerators have only one automatically controlled compartment (e.g., a "master"), while the other compartments are designated as dependent or "slaves". In some arrangements, the temperature in the slave compartments is adjusted by moving manually a mechanical damper or baffle that distributes the air to the compartments. Efforts to use a variable speed compressor (VSC) in an appliance with a manual damper (or no damper) are currently limited to narrow speed ranges, which reduces the potential benefits of a VSC in terms of energy consumption. For example, it is difficult to apply a VSC to single circuit systems with mechanical dampers as it will not compensate for ambient temperature changes. Because the change in speed affects the temperature balance among the compartments, temperature control of the "slave" compartment usually requires user actions to adjust the damper position, which results in a poor user experience.

Another solution is to use an automatic damper, which increases cost. Therefore, it is desirable to provide an energy-efficient temperature control method that addresses these problems.

Further, US20140165632 describes a method of operation a refrigeration system comprising a variable speed evaporator fan. The method comprising the steps of providing a set point temperature for the fresh food compartment and for the freezer compartment. The temperature of the fresh food compartment and the freezer compartment are measured. The fresh food compartment temperature error and the freezer food compartment temperature error are determined and both error temperatures are then use to determine the respective compartment demand for cold air. The speed of a fan can then be set accordingly.

The documents CN 106 123 441 A and US 2007/012055 A1 teach respective refrigeration appliances at different operation modes.

There is a constant desire to improve refrigeration appliances. Hence, there exists a need for an improved refrigeration appliance.

## SUMMARY

It is an object of the present invention to provide an improved refrigeration appliance.

These objects and or others are obtained by a refrigeration appliance as set out in the appended claims.

In accordance with the invention a refrigeration appliance is provided. The refrigeration appliance comprises a fresh-food compartment configured for storing food items at a first target temperature above zero degrees Celsius; and a freezer compartment configured for storing food items at a second target temperature below zero degrees Celsius. A cooling air channel is formed between the freezer compartment and the fresh-food compartment to allow air to flow between the freezer compartment and the fresh-food compartment. The refrigeration appliance further comprises a refrigeration circuit configured for cooling the freezer compartment, the circuit having a variable speed compressor, an evaporator, and a variable speed evaporator fan. A controller is operatively connected to the refrigeration circuit and configured to operate the variable speed compressor and the variable speed evaporator fan at a calculated speed of the variable speed compressor and a calculated speed of the variable speed evaporator fan, respectively; wherein in a normal mode of operation, the controller operates the variable speed compressor at a first calculated compressor speed and the variable speed evaporator fan at a first calculated fan speed and wherein in a freezer priority mode of operation, where cooling capacity is directed to the freezer compartment, the controller operates the variable speed compressor at a second calculated compressor speed and the variable speed evaporator fan at a second calculated fan speed, wherein the second calculated compressor speed is higher than the first calculated compressor speed and the second calculated fan speed is lower than the first calculated fan speed. Hereby an efficient control of the refrigeration appliance can be obtained wherein a quick-freezing mode can be supported that gives priority to the freezer in an efficient manner. Hereby items placed in the freezer compartment can be quickly frozen in an energy efficient manner.

In accordance with one embodiment a manually operated control button configured to switch between the controller to operating in said normal mode of operation and said freezer priority mode of operation is provided. Hereby an easy to implement and use control of the setting for the freezer priority mode can be obtained.

In accordance with one embodiment a manually operated baffle in said cooling air channel. Hereby the control of air in the cooling air-channel can be controlled in a manner that is cost-efficient to implement.

In accordance with one embodiment a defrost evaporator temperature sensor is provided, and wherein the controller is configured to automatically exit the freezer priority mode when the defrost evaporator temperature sensor indicates a temperature below a pre-set temperature. Hereby the defrost temperature sensor can be used to provide an input signal that indicates when the goods placed in the freezer compartment has reached a temperature where a freezer priority mode is no longer required.

In accordance with one embodiment a timer is provided and wherein the controller is configured to automatically exit the freezer priority mode when the timer indicates that the indicates freezer priority mode has been operational for a pre-set time. Hereby the freezer priority mode can be exited based on a timer to not let the freezer priority mode be enabled for a too long time period.

In accordance with one embodiment, the controller is configured to upon exiting the freezer priority mode of operation, return to the normal mode of operation. Hereby, a simple to implement control algorithm can be obtained.

In accordance with one embodiment, in the freezer priority mode, the fan speed is controlled to keep the temperature of the Fresh Food compartment closer to a temperature set point than in the normal mode of operation. Hereby the evaporator fan speed will be reduced when the temperature gets closer to the set point so it will take longer to cool down the refrigeration. This means the compressor operation duration increases so a larger cooling capacity is available to the freezer, thereby enabling a quick reduction of the temperature in the freezer compartment.

In accordance with one embodiment, where, in the freezer priority mode, the fan speed is calculated through a PID (Proportional, Integral and derivative) control algorithm based on the temperature error defined as the difference between Fresh Food temperature sensor and the temperature set point. Hereby a precise and stable control of the Fresh Food avoiding unnecessary compressor cycling.

In accordance with one embodiment, where, in the freezer priority mode, the minimum variable speed compressor is set to a, typically high speed, pre-determined value. This can be advantageous because high freezing capacity requires high compressor speed. Once the Fan speed is used to bring the Fresh Food closer to the set point, the compressor speed may not increase. Then the compressor can be forced to a predetermined, higher, speed so the desired larger cooling capacity is available.

In accordance with one embodiment, the compressor speed is configured to be set to the maximum speed of the compressor speed determined by the normal mode and the Freezer Priority pre-determined value. Thus, assuming there are at least two modes of operation: Normal mode of operation and Freezing Priority mode. In case the compressor is forced to a high speed of operation selected in the Freezing priority mode is not the maximum speed available (for example, for noise or energy optimization reasons) and there is cooling need (assuming that the evaporator fan is already operating in maximum speed), then the Normal Mode compressor speed calculation can be used (whenever higher than the Freezer Priority mode).

In accordance with one embodiment, where, in the freezer priority mode, the set point temperature of the fresh food compartment is configured to be set to a lower temperature than in the normal mode of operation. This can give an extra freezing capacity as a colder fresh food compartment will require a longer compressor run time.

**BRIEF DESCRIPTION OF THE DRAWINGS**

The invention will now be described in more detail, by way of example, and with reference to the accompanying drawings, in which:

Fig. 1 shows an insulated cabinet of a refrigeration appliance,

FIG. 2 shows the interior of a freezer compartment and a fresh-food compartment of a refrigerator,

FIG. 3 illustrates an example cooling/refrigeration system of a refrigerator, and

FIG. 4 is a flowchart illustrating some steps performed by a controller when controlling the cooling/refrigeration system.

**DETAILED DESCRIPTION**

The invention will now be described more fully hereinafter with reference to the accompanying drawings, in which certain embodiments of the invention are shown. The invention may, however, be embodied in many different forms and should not be construed as limited to the embodiments set forth herein; rather, these embodiments are provided by way of example so that this disclosure will be thorough and complete, and will fully convey the scope of the invention to those skilled in the art. For example, like or similar components of different embodiments can be exchanged between different embodiments. Some components can be omitted from different embodiments. Like numbers refer to like elements throughout the description.

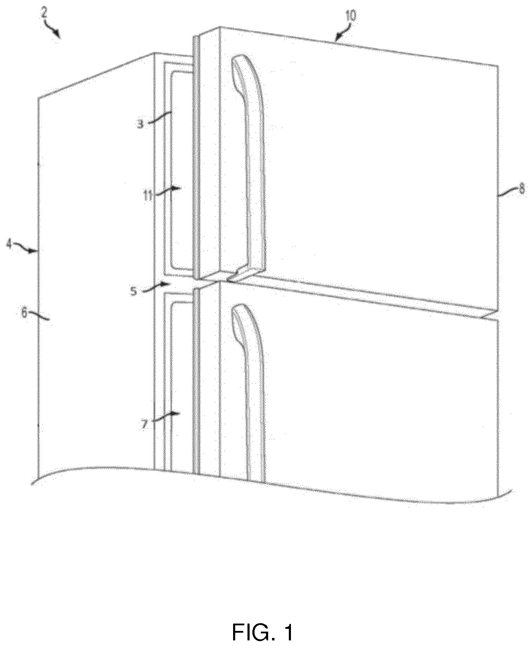

FIG. 1 shows an insulated cabinet of a refrigeration appliance constructed invention generally indicated at 2. The cabinet 2 includes a cabinet shell 4 defined at least in part by first and second upstanding side panels 6 and 8 that are interconnected and laterally spaced by a top panel 10. Although not shown in this figure, cabinet shell 4 would also include a rear panel and internal reinforcing structure. A liner 3 inside the shell can define spaces. Foam insulation may be used between the cabinet shell 4 and the liner 3. Since the refrigerator cabinet 2 represents a top mount-type refrigerator (i.e., including a freezer compartment 11 located above the fresh-food compartment 7), a divider portion 5 is provided which extends laterally across shell 4 and divides refrigerator cabinet 2 into an upper space that can be used as a freezer compartment 11, and a lower space that can be used as a fresh-food compartment 7.

The refrigerator 2 shown in FIG. 1 is one possible example of a refrigerator 2. For example, the refrigerator shown and described herein is a so-called top mount-type refrigerator with the freezer compartment 11 located above the fresh-food compartment 7. However, in some cases, the refrigerator can have a freezer compartment located below the fresh-food compartment (i.e., a bottom mount refrigerator), a side-by-side configuration of a refrigerator with a fresh-food compartment and a freezer compartment, a standalone refrigerator or freezer, etc. In further examples, the refrigerator 2 could be provided with multiple compartments or with compartments located above and/or laterally with respect to one another. Whatever arrangement of the freezer compartment and the fresh-food compartment is employed, typically, separate access doors are provided for the refrigerated compartments so that either compartment may be accessed without exposing the other compartment to the ambient air. For example, a door provides access to the freezer compartment, and a door provides access to the fresh-food compartment of the refrigerator. Although the embodiments described in detail below, and shown in the figures concern a top mount-type refrigerator, the refrigerator can have any desired configuration including at least one compartment for storing food items, at least one door for closing the compartment(s), and a condenser/cooling system configured to remove heat energy from the compartment(s) to the outside environment, without departing from the scope of the present invention. Accordingly, it is to be appreciated that the refrigerator 2 shown in FIG. 1 comprises only one possible example, as any number of designs and configurations are contemplated.

Turning to the shown example of FIG. 1, the freezer compartment 11 includes a freezer compartment door 9 and the fresh-food compartment 7 includes a fresh-food compartment door 12. Both the fresh-food compartment 7 and the freezer compartment 11 define substantially hollow interior portions and may include shelves, drawers, or the like.

A cooling air channel or air duct can be formed between the freezer 11 and fresh-food 7 compartments to allow air flow between the two compartments 7, 11. In one embodiment, the cooling air channel can be a fixed cooling air channel formed with specific fixed dimensions that do not vary during the operation of the refrigerator 2. In certain embodiments, the dimensions of the cooling air channel between the freezer 11 and fresh-food 7 compartments can be controlled by a manual damper configured to be operated by the user.

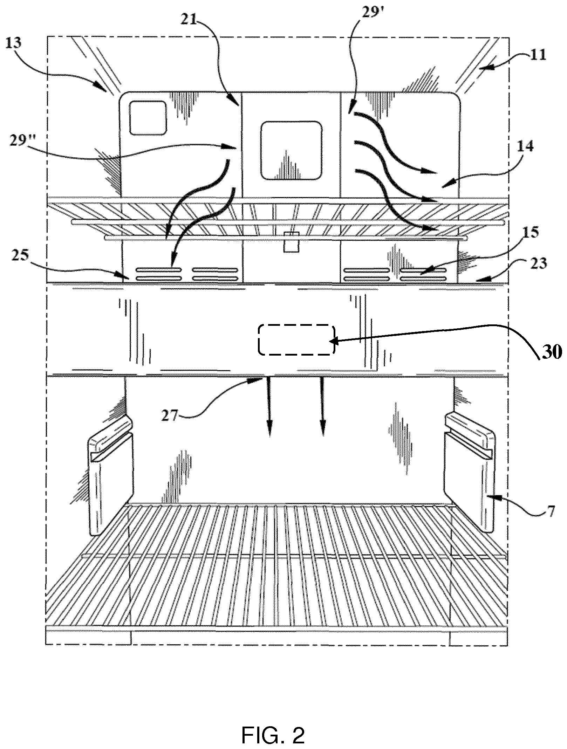

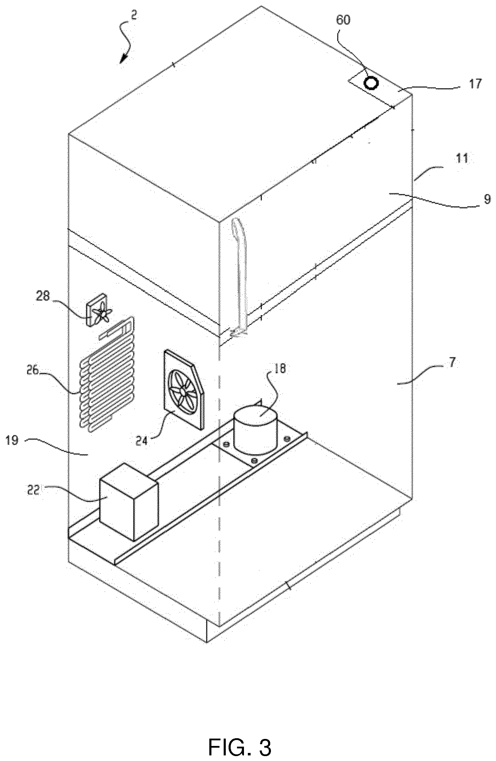

FIG. 2 shows the interior of the freezer compartment 11 and the fresh-food compartment 7 of the refrigerator 2. The interior of the freezer compartment 11 can include an air tower 21 secured to the back of the freezer compartment 11 to the rear wall 13 of the liner 3, facing the interior of the freezer compartment 11. In one embodiment, the air tower 21 may be attached to the lower center area of an evaporator cover 14. The evaporator coil cover 14 can be coupled to the rear liner 13 by any suitable mechanical (e.g., screws, rivets, nuts and bolts, etc.), chemical (e.g., adhesive, epoxy, etc.), or other type of fastener. Vents 15 are provided in a lower portion of the evaporator coil cover 14 that allow a circulation of air pulled by the evaporator fan (shown in FIG. 3) through the evaporator. Although the example of FIG. 2 shows the evaporator coil cover 14 in the freezer compartment 11, it is contemplated that the evaporator coil cover 14 can be located inside the fresh-food compartment 7, in between the freezer compartment 11 and the fresh-food compartment 7 or even externally forming an evaporator compartment, without departing from the scope of the present invention.

The air tower 21 serves to distribute cool air discharged from the evaporator fan (shown in FIG. 3) throughout the freezer compartment 11 and the fresh-food compartment 7 of the refrigerator 2. In one embodiment, the bottom edge of the air tower 21 is insertable into a foamed-in air duct that is in fluid communication with the fresh-food compartment 7 of the refrigerator 2, so to permit the air tower 21 to provide cool air discharged from the evaporator fan to the fresh-food compartment 7. Vents can be disposed on top and upper sides of the air tower 21 to distribute cool air to the freezer compartment 11. Vents can also be disposed on the lower sides of the air tower 21 to return air from the freezer compartment 11 to the air tower 21 for recirculation.

As is further illustrated in FIG. 2, the bottom of the freezer compartment 11 includes a floor 23, which is a portion of the wall or mullion 5 that separates the freezer compartment 11 from the fresh-food compartment 7. The floor 23 may also include inlet openings 25 that may serve as air ducts that direct return air from the fresh-food compartment 7 to the freezer compartment 11 above. Air that has circulated through the fresh-food compartment 7 may return to the freezer 11 through the inlet openings 25. The floor 23 may also include an exhaust opening 27. The exhaust opening 27 serves as a cooling air channel 27 in the floor through which cold air (i.e., supply air) from the freezer compartment 11 is directed to the fresh-food compartment 7. The cooling air channel 27 can be controlled by a baffle 30 to an open position and to a closed position. Also, the baffle 30 may in some embodiments be controlled to a position between the open position and the closed position. The baffle 30 can in accordance with some embodiments be controlled manually.

The upper side portions of the air tower 21 may be provided with air openings, such as air ports 29' and 29", for example. The air ports 29' and 29" allow the cool air from the fresh-food compartment 7 that passes upwardly through the air tower 21 to be discharged via the air ports 29' and 29" into the interior of the freezer compartment 11. The air ports 29' and 29" may be formed on each side portions of the air tower 21, and may be positioned or oriented variously as desired to direct the cool air towards certain parts of the freezer compartment 11. Any number of air ports 29' and 29" may be provided on each of the side portions of the air tower 21 in various shapes and sizes. For example, the upper air ports 29' and 29" can have larger cross-sectional dimensions than the middle and lower air ports 29' and 29" to balance out the air flow distribution and provide uniform cooling in the freezer compartment 11, since the upper air ports 29' and 29" are located furthest from the inlet at the lower portion of the air tower 21. In this manner, for a given air flow rate or pressure through the air tower 21, relatively the same amount or rate of airflow will be discharged out of the various air ports 29' and 29".

FIG. 3 illustrates an example cooling/refrigeration system of the refrigerator 2 includes a machine compartment 19 housing the refrigeration components, such as a variable speed compressor 18, a condenser 22 connected to the compressor 18, a condenser fan 24, an evaporator 26 connected in series and charged with a refrigerant, and a variable speed evaporator fan 28. The variable speed evaporator fan 28 circulates cooling air through the refrigerator compartments and improves heat transfer efficiency. The condenser 22 expels heat withdrawn by the evaporator 26 from the fresh-food compartment 7 and the freezer compartment 11, respectively. The variable speed compressor 18 and or the evaporator fan and potentially also other devices of the refrigerator 2 can be controlled by a controller 60. The refrigeration appliance thus can control the temperature in the compartments of a refrigerator appliance by cooling by a refrigeration circuit comprising, a variable speed compressor, an evaporator, and a variable speed evaporator fan.

The controller can be configured to control the refrigerator 2 in, at least, two different modes. The at least two different modes of operation can comprise a normal mode of operation and a freezer priority mode. In the freezer priority mode cooling capacity is directed to the freezer compartment to increase the freezing capacity of the freezer compartment. This is typically advantageous when placing relatively warm items in the freezer compartment to freeze the item. For example, when placing unfrozen goods in the freezer compartment it is often beneficial to quickly freeze the un-frozen goods. In accordance with some embodiments the controller is configured to reduces the evaporator fan speed according to the refrigerator compartment temperature (directly proportional to the difference between measured and set point temperatures). This control can be carried out by any standard industry control strategy, even a simple proportional control can be used. However, a Proportional Integral (PI), Proportional Integral Derivative (PID), Fuzzy logic or any modern control algorithms can also be used. The controller can also be configured to control the variable speed compressor where the controller is configured to, in a normal mode of operation, operate the variable speed compressor at a first calculated compressor speed and in a freezer priority, mode of operation, operate the variable speed compressor at a second calculated compressor speed where the second calculated compressor speed is higher than the first calculated compressor speed.

Switching between the normal mode of operation and the freezer priority mode can be performed manually using a control button such as a switch or the like. In the alternative, the freezer priority mode can be a subroutine called by any function of a control algorithm run by the controller, for instance, a warm product start up (pulldown), door opening or load detection routines.

When operating in the freezer priority mode, the evaporator fan and/or the variable compressor fan is operated differently than in the normal mode of operation as described above. Hereby, more cooling capacity can be directed to the freezer compartment. This will reduce the time for freezing items/goods placed in the freezer compartment. The freezer priority mode is enabled until some exit condition is met. For example, a user can manually turn off the freezer priority mode. In accordance with one embodiment, a defrost evaporator temperature sensor can be provided. The controller 60 can then be configured to automatically exit the freezer priority mode when the defrost evaporator temperature sensor indicates a temperature below a pre-set temperature. In accordance with some embodiments a timer can be provided and the controller can be configured to automatically exit the freezer priority mode when the timer indicates that the freezer priority mode has been operational for a pre-set time. Also, in case the freezer priority mode is called by some other control algorithm subroutine, the subroutine can have its own criteria to termination (for instance, time, temperature, power, temperature gradients)

When the priority freezer mode is exited, the controller can be configured to return to the normal mode of operation where the refrigeration is controlled in accordance with a control algorithm for normal operation of the refrigerator. This normal mode of operation can typically be any pre-existing control algorithm for control of a refrigerator of the kind described herein.

In accordance with some exemplary embodiments, the evaporator fan speed is controlled to keep the temperature of the Fresh Food compartment at the temperature set point (closer to the temperature set point). For example, when the temperature set point is set to a value during normal mode of operation such as e.g. 6 °C the temperature is allowed to vary within some range around the temperature set point, for instance, within ± 1°C. In such situation, the controller calculates the compressor and fan speeds to ensure a normal cooling capacity distribution among the compartments When in the priority freezer mode, the evaporator fan is controlled to let the temperature aim and stay at the set point temperature as much as possible. This change in control behavior allows more cooling capacity to be delivered to the freezer.

In accordance with some embodiments the evaporator fan speed can calculated through a, Proportional, Integral and derivative, PID, control algorithm based on the Fresh Food temperature error defined as the difference between Fresh Food temperature sensor and the temperature set point in the freezer priority mode. This allows the fresh food temperature to be stable at the set point during the Freezer priority mode

For example, a pulse width modulated (PWM) evaporator fan speed signal fan PWM can be set in accordance with

$$Fan_{PWM} = Fan_P + Fan_I - Fan_D$$

$$T_{Err_{FF}} = T_{measured_{FF}} - T_{set_{FF}}$$

$$Fan_P = Kp_{Fan} * T_{Err_{FF}}$$

$$Fan_I = \frac{Kp_{Fan}}{Ti_{Fan}} * Integral_{T_{Err_{FF}}}$$

$$Fan_D = Kp_{Fan} * Td_{Fan} * Derivative_{T_{measured_{FF}}}$$

Where $T_{Err_{FF}}$ is the measured temperature minus the set temperature (setpoint temperature), the $Integral_{ErrorFF}$ is the time integration of the temperature error $T_{Err_{FF}}$ and the $Derivative_{TmeasuredFF}$ is the time derivative of the $T_{measuredFF}$

The Kp, Ti and Td are the PID parameters (usually constants).

The Integral and/or Derivative parameters can be set to zero, making the control a P (both set to Zero), PD (Integral is set to Zero) or PI (Derivative is set to Zero).

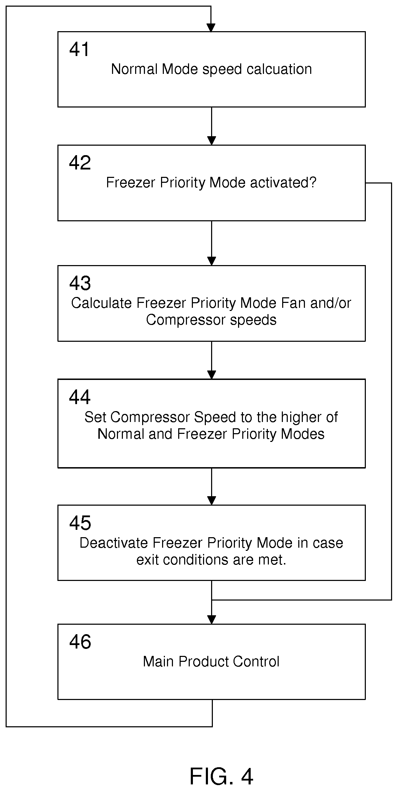

FIG. 4 is a flowchart illustrating some steps that can be performed by the controller 60 when controlling the refrigeration appliance in accordance with the teachings herein. First, in a step 41 the controller 60 is set to control the refrigeration appliance in accordance with a first control algorithm. This first control algorithm can be referred to as a normal mode of operation and can be in accordance with any control algorithm used for controlling a refrigeration appliance with at least one freezer compartment and one fresh food compartment. Next, in a step 42, a priority freezer mode is activated, the priority freezer mode is a second mode of operation that controls the refrigeration appliance in accordance with another control algorithm than the control algorithm used in the normal mode of operation. In particular the control of the speed of a VSC and/or the control of the evaporator fan speed can be controlled differently from the normal mode of operation. The priority freezer mode can be activated based on some pre-determined condition or can be activated manually. When in the priority freezer mode new speeds for the compressor and or evaporator fan are calculated in a step 43. The calculated new speeds for the compressor and or evaporator fan speed are then applied. In accordance with some embodiment the compressor speed can be set to the highest of the compressor speeds calculated for the normal mode of operation and the freeze priority mode in a step 44. Next, in a step 45, the controller checks for an exit condition to leave the priority freezer mode. The exit condition can be any pre-set condition such as the ones described hereinabove, or the exit condition can be a manually entered command to exit the priority freezer mode. If the condition to exit is met in step 45, the priority freezer mode is exit and the controller starts to control the refrigeration appliance in accordance with another control algorithm in a step 46. In accordance with one embodiment the control algorithm applied in step 46 is the control algorithm used for the normal mode of operation, but another, third, control algorithm can also be used.

**Claims**

1. A refrigeration appliance (2), comprising:

   a fresh-food compartment (7) configured for storing food items at a first target temperature above zero degrees Celsius;
   a freezer compartment (11) configured for storing food items at a second target temperature below zero degrees Celsius;
   a cooling air channel (27) formed between the freezer compartment and the fresh-food compartment
   a refrigeration circuit configured for cooling the freezer compartment, the circuit having a variable speed compressor (18), an evaporator (26), and a variable speed evaporator fan (28); and
   a controller (60) operatively connected to the refrigeration circuit and configured to:
   operate the variable speed compressor and the variable speed evaporator fan at a calculated speed of the variable speed compressor and a calculated speed of the variable speed evaporator fan, respectively; wherein in a normal mode of operation, the controller operates the variable speed compressor at a first calculated compressor speed and the variable speed evaporator fan at a first calculated fan speed, and wherein in a freezer priority mode of operation, where cooling capacity is directed to the freezer compartment, the controller (60) operates the variable speed compressor at a second calculated compressor speed and the variable speed evaporator fan at a second calculated fan speed, wherein the second calculated compressor speed is higher than the first calculated compressor speed and **characterized in that** the second calculated fan speed is lower than the first calculated fan speed.

2. The refrigeration appliance according to claim 1, comprising a manually operated control button configured to switch between the controller to operating in said normal mode of operation and said freezer priority mode of operation.

3. The refrigeration appliance according to claim 1 or 2, comprising a manually operated baffle (30) in said cooling air channel.

4. The refrigeration appliance according to any one of claims 1 - 3, comprising a defrost evaporator temperature sensor, and wherein the controller is configured to automatically exit the freezer priority mode when the defrost evaporator temperature sensor indicates a temperature below a pre-set temperature.

5. The refrigeration appliance according to any one of claims 1 - 4, comprising a timer and wherein the controller is configured to automatically exit the freezer priority mode when the timer indicates that the freezer priority mode has been operational for a pre-set time.

6. The refrigeration appliance according to any one of claims 1 - 5, wherein the controller is configured to upon exiting the freezer priority mode of operation return to the normal mode of operation.

7. The refrigeration appliance according to any one of claims 1 - 6, where, in the freezer priority mode, the evaporator fan speed is controlled to keep the temperature of the fresh-food compartment (7) closer to a temperature set point than in the normal mode of operation.

8. The refrigeration appliance according to any one of claims 1 - 7, where, in the freezer priority mode, the evaporator fan speed is calculated through a, Proportional, Integral and derivative, PID, control algorithm based on the temperature error defined as the difference between a fresh food temperature sensor and the temperature set point.

9. The refrigeration appliance according to any one of claims 1 - 8, where, in the freezer priority mode, the minimum variable speed compressor is set to a pre-determined value.

10. The refrigeration appliance according to any one of claims 1 - 9 where the compressor speed is configured to be set to the maximum speed between the compressor speed determined by the normal mode and the freezer priority pre-determined value.

11. The refrigeration appliance according to any one of claims 1-10 where, in the freezer priority mode, the set point temperature of the fresh food compartment is configured to be set to a lower temperature than in the normal mode of operation.

**Patentansprüche**

1. Kühlvorrichtung (2), die Folgendes umfasst:

   ein Fach (7) für frische Lebensmittel, das konfiguriert ist, Lebensmittel bei einer ersten Solltemperatur über null Grad Celsius zu lagern;
   ein Gefrierfach (11), das konfiguriert ist, Lebensmittel bei einer zweiten Solltemperatur unter null Grad Celsius zu lagern;
   einen Kühlluftkanal (27), der zwischen dem Gefrierfach und dem Fach für frische Lebensmittel ausgebildet ist,
   einen Kühlkreislauf, der konfiguriert ist, das Gefrierfach zu kühlen, wobei der Kreislauf einen Kompressor (18) mit variabler Drehzahl, einen Verdampfer (26) und ein Verdampfergebläse (28) mit variabler Drehzahl aufweist; und
   eine Steuereinheit (60), die mit dem Kühlkreislauf betriebstechnisch verbunden ist und konfiguriert ist zum:

   Betreiben des Kompressors mit variabler Drehzahl und des Verdampfergebläses mit variabler Drehzahl mit einer berechneten Drehzahl für den Kompressor mit variabler Drehzahl bzw. mit einer berechneten Drehzahl für das Verdampfergebläse mit variabler Drehzahl; wobei in einer normalen Betriebsart die Steuereinheit den Kompressor mit variabler Drehzahl mit einer ersten berechneten Kompressordrehzahl und das Verdampfergebläse mit variabler Drehzahl mit einer ersten berechneten Gebläsedrehzahl betreibt, und wobei in einer Betriebsart mit Gefrierpriorität, bei der die Kühlkapazität auf das Gefrierfach gerichtet wird, die Steuereinheit (60) den Kompressor mit variabler Drehzahl mit einer zweiten berechneten Kompressordrehzahl und das Verdampfergebläse mit variabler Drehzahl mit einer zweiten berechneten Gebläsedrehzahl betreibt, wobei die zweite berechnete Kompressordrehzahl höher als die erste berechnete Kompressordrehzahl ist, und **dadurch gekennzeichnet, dass** die zweite berechnete Gebläsedrehzahl niedriger als die erste berechnete Gebläsedrehzahl ist.

2. Kühlvorrichtung nach Anspruch 1, die eine manuell bedienbare Einstelltaste aufweist, die konfiguriert ist, die Steuereinheit umzuschalten, so dass sie in einer normalen Betriebsart und in einer Betriebsart mit Gefrierpriorität arbeitet.

3. Kühlvorrichtung nach Anspruch 1 oder 2, die eine manuell bedienbare Umlenkplatte (30) im Kühlluftkanal aufweist.

4. Kühlvorrichtung nach einem der Ansprüche 1-3, die einen Temperatursensor zum Abtauen des Verdampfers umfasst, wobei die Steuereinheit konfiguriert ist, die Betriebsart mit Gefrierpriorität automatisch zu verlassen, wenn der Temperatursensor zum Abtauen des Verdampfers eine Temperatur unter einer zuvor eingestellten Temperatur anzeigt.

**5.** Kühlvorrichtung nach einem der Ansprüche 1-4, die einen Zeitgeber umfasst, wobei die Steuereinheit konfiguriert ist, die Betriebsart mit Gefrierpriorität automatisch zu verlassen, wenn der Zeitgeber anzeigt, dass die Betriebsart mit Gefrierpriorität für eine zuvor eingestellte Zeit in Betrieb gewesen ist.

**6.** Kühlvorrichtung nach einem der Ansprüche 1-5, wobei die Steuereinheit konfiguriert ist, beim Verlassen der Betriebsart mit Gefrierpriorität zur normalen Betriebsart zurückzukehren.

**7.** Kühlvorrichtung nach einem der Ansprüche 1-6, wobei in der Betriebsart mit Gefrierpriorität die Drehzahl des Verdampfergebläses so gesteuert wird, dass die Temperatur des Fachs (7) für frische Lebensmittel näher an einem Temperatursollwert als in der normalen Betriebsart gehalten wird.

**8.** Kühlvorrichtung nach einem der Ansprüche 1-7, wobei in der Betriebsart mit Gefrierpriorität die Drehzahl des Verdampfergebläses durch einen Proportional-Integral-Differential-Steueralgorithmus (PID-Steueralgorithmus) auf der Basis des Temperaturfehlers, der als die Differenz zwischen einem Temperatursensor für frische Lebensmittel und dem Temperatursollwert definiert ist, berechnet wird.

**9.** Kühlvorrichtung nach einem der Ansprüche 1-8, wobei in der Betriebsart mit Gefrierpriorität die minimale variable Drehzahl des Kompressors auf einen zuvor festgelegten Wert eingestellt wird.

**10.** Kühlvorrichtung nach einem der Ansprüche 1-9, wobei die Kompressordrehzahl so konfiguriert ist, dass sie auf die maximale Drehzahl aus der Kompressordrehzahl, die durch die normale Betriebsart festgelegt wird, und dem zuvor festgelegten Wert für die Gefrierpriorität eingestellt wird.

**11.** Kühlvorrichtung nach einem der Ansprüche 1-10, wobei in der Betriebsart mit Gefrierpriorität die Sollwerttemperatur des Fachs für frische Lebensmittel so konfiguriert ist, dass sie auf eine niedrigere Temperatur als in der normalen Betriebsart eingestellt wird.

**Revendications**

**1.** Appareil de réfrigération (2), comprenant :

un compartiment pour aliments frais (7) configuré pour stocker des produits alimentaires à une première température cible au-dessus de zéro degré Celsius ;
un compartiment congélateur (11) configuré pour stocker des produits alimentaires à une deuxième température cible au-dessous de zéro degré Celsius ;
un canal d'air de refroidissement (27) ménagé entre le compartiment congélateur et le compartiment pour aliments frais ;
un circuit de réfrigération configuré pour refroidir le compartiment congélateur, le circuit étant pourvu d'un compresseur à vitesse variable (18), d'un évaporateur (26), et d'un ventilateur d'évaporateur à vitesse variable (28) ; et
un régulateur (60) relié fonctionnellement au circuit de réfrigération et configuré pour :

faire fonctionner le compresseur à vitesse variable et le ventilateur d'évaporateur à vitesse variable respectivement à une vitesse calculée du compresseur à vitesse variable et à une vitesse calculée du ventilateur d'évaporateur à vitesse variable ;
dans un mode de fonctionnement normal, le régulateur faisant fonctionner le compresseur à vitesse variable à une première vitesse de compresseur calculée et le ventilateur d'évaporateur à vitesse variable à une première vitesse de ventilateur calculée, et
dans un mode de fonctionnement donnant la priorité au congélateur, dans lequel la capacité de refroidissement est dirigée vers le compartiment congélateur, le régulateur (60) faisant fonctionner le compresseur à vitesse variable à une deuxième vitesse de compresseur calculée et le ventilateur d'évaporateur à vitesse variable à une deuxième vitesse de ventilateur calculée, la deuxième vitesse de compresseur calculée étant supérieure à la première vitesse de compresseur calculée, et **caractérisé en ce que** la deuxième vitesse de ventilateur calculée est inférieure à la première vitesse de ventilateur calculée.

**2.** Appareil de réfrigération selon la revendication 1, comprenant un bouton de commande actionné manuellement configuré pour commuter le fonctionnement du régulateur entre ledit mode de fonctionnement normal et ledit mode de fonctionnement donnant la priorité au congélateur.

**3.** Appareil de réfrigération selon la revendication 1 ou 2, comprenant un déflecteur actionné manuellement (30) dans ledit canal d'air de refroidissement.

**4.** Appareil de réfrigération selon l'une quelconque des revendications 1 à 3, comprenant un capteur de température d'évaporateur de dégivrage, et le régulateur étant configuré pour quitter automatiquement le mode donnant la priorité au congélateur lorsque le capteur de température d'évaporateur de dégivrage indique une température au-dessous d'une température préréglée.

**5.** Appareil de réfrigération selon l'une quelconque des revendications 1 à 4, comprenant une minuterie et le régulateur étant configuré pour quitter automatiquement le mode donnant la priorité au congélateur lorsque la minuterie indique que le mode donnant la priorité au congélateur a été actif pendant une durée préréglée.

**6.** Appareil de réfrigération selon l'une quelconque des revendications 1 à 5, le régulateur étant configuré pour, lorsqu'il quitte le mode de fonctionnement donnant la priorité au congélateur, repasser au mode de fonctionnement normal.

**7.** Appareil de réfrigération selon l'une quelconque des revendications 1 à 6, dans le mode donnant la priorité au congélateur, la vitesse de ventilateur d'évaporateur étant régulée pour maintenir la température du compartiment pour aliments frais (7) plus près d'une température de consigne que dans le mode de fonctionnement normal.

**8.** Appareil de réfrigération selon l'une quelconque des revendications 1 à 7, dans le mode donnant la priorité au congélateur, la vitesse de ventilateur d'évaporateur étant calculée au moyen d'un algorithme de régulation proportionnelle, intégrale et dérivée, PID, sur la base de l'erreur de température définie comme l'écart entre un capteur de température d'aliments frais et la température de consigne.

**9.** Appareil de réfrigération selon l'une quelconque des revendications 1 à 8, dans le mode donnant la priorité au congélateur, le compresseur à vitesse variable minimale étant réglé sur une valeur prédéterminée.

**10.** Appareil de réfrigération selon l'une quelconque des revendications 1 à 9, la vitesse de compresseur étant configurée pour être réglée sur la vitesse maximale entre la vitesse de compresseur déterminée par le mode normal et la valeur prédéterminée donnant la priorité au congélateur.

**11.** Appareil de réfrigération selon l'une quelconque des revendications 1 à 10, dans le mode donnant la priorité au congélateur, la température de consigne du compartiment pour aliments frais étant configurée pour être réglée sur une température plus basse que dans le mode de fonctionnement normal.

FIG. 1

FIG. 2

FIG. 3

```
┌─────────────────────────────────────────┐
│ 41                                        │
│      Normal Mode speed calcuation         │
└─────────────────────────────────────────┘
                    ↓
┌─────────────────────────────────────────┐
│ 42                                        │
│      Freezer Priority Mode activated?     │
└─────────────────────────────────────────┘
                    ↓
┌─────────────────────────────────────────┐
│ 43                                        │
│  Calculate Freezer Priority Mode Fan and/or│
│           Compressor speeds               │
└─────────────────────────────────────────┘
                    ↓
┌─────────────────────────────────────────┐
│ 44                                        │
│   Set Compressor Speed to the higher of   │
│   Normal and Freezer Priority Modes       │
└─────────────────────────────────────────┘
                    ↓
┌─────────────────────────────────────────┐
│ 45                                        │
│  Deactivate Freezer Priority Mode in case │
│        exit conditions are met.           │
└─────────────────────────────────────────┘
                    ↓
┌─────────────────────────────────────────┐
│ 46                                        │
│          Main Product Control             │
└─────────────────────────────────────────┘
```

FIG. 4

**REFERENCES CITED IN THE DESCRIPTION**

*This list of references cited by the applicant is for the reader's convenience only. It does not form part of the European patent document. Even though great care has been taken in compiling the references, errors or omissions cannot be excluded and the EPO disclaims all liability in this regard.*

**Patent documents cited in the description**

- US 20140165632 A
- CN 106123441 A

- US 2007012055 A1